# EUROPEAN PATENT SPECIFICATION

(11) **EP 1 730 324 B1**
(45) Date of publication and mention of the grant of the patent: **05.11.2008**
(21) Application number: 04724711.9
(22) Date of filing: 31.03.2004
(51) Int. Cl.: C23F 1/46, B21C 35/06

(54) **PROCESS FOR RECOVERING CAUSTIC SODA SOLUTIONS FROM PICKLING OF ALUMINIUM EXTRUSION DIES**
VERFAHREN ZUR WIEDERGEWINNUNG VON ÄTZNATRONLÖSUNGEN ANFALLEND BEIM ABBEIZEN VON MATRIZEN DER ALUMINIUMEXTRUSION
PROCÉDÉ DE RÉCUPÉRATION DE SOLUTIONS DE SOUDE CAUSTIQUE DU DÉCAPAGE DE MATRICES POUR L'EXTRUSION DE L'ALUMINIUM

(43) Date of publication of application: 13.12.2006
(73) Proprietor: G. R. Trattamenti Termici - GRTT S.R.L., 04014 Frazione Fossanova-Pontinia (IT)
(72) Inventor: RICCIARINI, Silvia, I-00147 Roma (IT); COLELLA, Carmine, I-80070 Pozzuoli (IT); CAPUTO, Domenico, I-84012 Angri (IT); DE GENNARO, Bruno, I-80129 Napoli (IT)
(74) Representative: Sarpi, Maurizio
(86) International application number: PCT/IT2004/000167
(87) International publication number: WO 2005/095674

(56) References cited:
- EP-A- 0 092 108
- GB-A- 2 138 792
- US-A- 3 486 954
- PATENT ABSTRACTS OF JAPAN vol. 0010, no. 91 (C-023), 24 August 1977 (1977-08-24) -& JP 52 052894 A (YOSHIDA TEKKOSHO:KK), 28 April 1977 (1977-04-28) & DATABASE WPI Section Ch, Week 197723 Derwent Publications Ltd., London, GB; Class D15, AN 1977-40727Y & JP 52 052894 A (YOSHIDA TEKKOSHO KK) 28 April 1977 (1977-04-28)
- PATENT ABSTRACTS OF JAPAN vol. 0050, no. 16 (C-041), 30 January 1981 (1981-01-30) -& JP 55 144415 A (SOMA KAZUO; others: 01), 11 November 1980 (1980-11-11) & DATABASE WPI Section Ch, Week 198103 Derwent Publications Ltd., London, GB; Class D15, AN 1981-02853D & JP 55 144415 A (SOMA K) 11 November 1980 (1980-11-11)
- PATENT ABSTRACTS OF JAPAN vol. 0041, no. 40 (C-026), 3 October 1980 (1980-10-03) -& JP 55 090415 A (SHOWA KOKI KK), 9 July 1980 (1980-07-09) & DATABASE WPI Section Ch, Week 198034 Derwent Publications Ltd., London, GB; Class E33, AN 1980-59473C & JP 55 090415 A (SHOWA KOKI KK) 9 July 1980 (1980-07-09)
- DATABASE WPI Section Ch, Week 197511 Derwent Publications Ltd., London, GB; Class D15, AN 1975-18161W XP002305281 -& JP 49 064531 A (YOSHIDA GIKEN) 22 June 1974 (1974-06-22)

## Description

### A Short Summary of the Invention

This invention relates to the field of production of aluminum extrusions sections, and more particularly it relates to a process for recovering sodium hydroxide solutions from industrial reflux liquors that come from the process of pickling the extrusion dies for aluminum, and possibly for the re-employment of said solutions in further pickling cycles.

The process that has been set forth consists in the addition to the aluminate-containing alkaline exhausted solution of an amount of silicate ions which, reacting in the presence of Na⁺ ions at temperatures lower than 100°C, give rise to the formation of an aluminosilicate hydrated phase of zeolitic type in the form of a precipitate according to the following global reaction:

Na⁺ + nSi(OH)₄ + Al(OH)₄⁻ + aH₂O = ½[Na₂O.Al₂O₃.2nSiO₂.bH₂O]

with b = 4(n + 1) + 2a.

The aluminate ion concentration decrease in the alkaline solution due to the precipitation of the zeolitic phase allows through a suitable mechanical separation the recovery and recycling of the alkaline solution to be carried out.

### The technical field

Extrusion represents the most important technique for producing unfinished products of aluminum and its alloys for plastic deformation. Indeed, it is well known that such technology is optimally suitable for exploitation through a lot of various shapes of the fundamental properties of aluminum alloys, as for instance their low density, high mechanical strength, corrosion resistance and their easy assembling.

The extrusion process of aluminum is carried out employing the so-called "extrusion dies", i.e. steel blocks of a complex geometry that are to give a shape to the extruded piece.

During the extrusion process the metal, previously heated up to a temperature higher than 500°C, is forced to flow under the pressure of the press piston through the shape in the end portion of the die. So aluminum takes on the final shape of the extrusion.

A the end of the production cycle the die is to undergo a pickling process in suitable tanks containing a strongly alkaline solution of sodium hydroxide at about 60°C for a time of about 6 hours in order to clear all die's cavities of the aluminum. When the time needed for dissolving the aluminum has elapsed, the dies are removed and washed with water, and the reflux solution is transferred into stockage tanks and is intended for disposal in due course. Disposal of said solution is quite a delicate phase of the process, as such refluxed solution is considered to be a special waste and accordingly it is to be disposed in special dumps devoted to dangerous products.

It is known, in the art, the treatment of spent or exhausted waste liquor originating from working or etching aluminum.

For instance, JP52052894 discloses how to obtain aluminum sulphate by treating neutralised sludge of difficult disposal waste with electrolytic sulphate acid, to recover aluminum silicate soda from waste etching solution and to use recirculation caustic soda. From said process, the liquor origin is not indicated and the technical problem posed does not concern zeolites production.

JP55144415 discloses a process to recover NaOH from caustic soda waste solution by mixing aluminium sludge (Al hydroxide) with the Al-containing caustic waste solution and then adding silicate (e.g.water glass) to the mixture in an amount to obtain a suitable molar ratio of SiO₂/Al₂O₃ for zeolite formation. According to JP55144415 the mixture is reacted at 45°C so as to crystallize the zeolite which is separated by filtration.

US-A-3 486954 discloses a process wherein hot alkali etching solutions from etching aircraft components of Al are regenerated by addition of sodium silicate. The aluminosilicate precipitate is removed. According to US-A-3 486954 the obtained complex aluminosilicate shows a ratio Al/Si =2, (that is 44,5% Al₂O₃ and 26.3% SiO₂, see column 3 line 48).

JP 55090415 discloses a precipitate sodium aluminosilicate with high purity obtained by addition of sodium silicate to an Al working waste liquor. There is not evidence that an alumino-silicate compound of high purity is a zeolite.

JP 49064531 discloses a crystalline alumino-silicate as precipitate from a spent Al pickling solution by adding 30% Na silicate. The presence of Na gluconate in the alkali etching waste solution is mentioned. Teachings about the value of Si/Al molar ratio are not indicated.

EP-A-0092108 concerns a process for recovering Al and Fe from acid solutions containing said metals in order to reuse them. It is provided the addition of CaO, the Al recovering as aluminate which is then used for the production of zeolite in general, and a recovering of Fe as oxide, to be used as "mass laming" or as pigment.

GB-A-2138792 discloses a process for the manufacture of Zeolite A from aqueous medium comprising silica, alumina and caustic soda originating from the treatment of blast-furnace slag with waste acid, wherein the molar ratio of silica to alumina can be controlled between 60 and 1.2.

Accordingly, the need for an alternative procedure to solve the problem of disposal of industrial waste refluxed solutions coming from the pickling process of the extrusion dies for aluminum sections.

It is a first object of this finding to develop a process capable of recovering such solutions and of restoring its efficiency for exploitation in new pickling cycles.

In order to attain said objective, the idea has been conceived to exploit the process of synthesizing the zeolites in order to remove aluminum from the pickling refluxed solutions, by previously adding a suitable source of silica, so as to recover the sodium hydroxide solution and to produce a more easily disposable and not environmentally dangerous mud which, if is of interest for industrial purposes, can even be recovered and re-employed.

Accordingly, it is a second objective of this finding to set forth a process for recovering sodium hydroxide solutions from the pickling process of extrusion dies for aluminum, said process being capable of producing precipitates of zeolitic nature which can be re-employed industrially and anyway can be disposed as muds which are not dangerous for the environment.

Zeolites from a chemical standpoint are alkali metal and alkaline-earth metal silicoaluminates hydrated, like sodium, potassium and calcium silicoaluminates endowed with microporous structure, said feature giving them an important role in the industrial field. Such zeolites are indeed employed in ionic exchange processes, in catalysis and adsorption, as is described in details in the following section.

A great variety of zeolites is present in nature which are dintinct' from one another by structural characteristic differences. The structural unit of zeolites is the tetrahedron whose vertices are occupied by oxygen atoms, while the aluminum and silicon atoms are arranged at the center. The alkali or alkaline-earth metal cations outside the lattice belong in the crystal channels and they serve to neutralize the charge unbalance caused by the aluminum four-coordination, said extra-lattice cations giving rise to the ionic exchange properties already mentioned because they do not belong to the lattice. Zeolites can be obtained by synthesis starting from reactive alumino-silicate mixtures. The mechanism of formation of zeolites is quite complex and occurs under various conditions according to the type of zeolite that is to be synthesized.

The basic reaction parameters which are shared by all syntheses of zeolites are:
- alkaline environment
- synthesis mixture: aluminosilicate gel
- temperature.

Once crystallization is completed, a solid phase is present which is made up of the zeolite, together with a liquid phase, which is called the mother solution and is made up of an alkaline solution of the cation which is present in the zeolite.

As far as the given objective is concerned, it was tried to exploit the fact that the reflux liquors from the pickling process which have been described, being strongly alkaline (NaOH solutions) and containing a certain amount of dissolved aluminum, can be conveniently mixed with a silica source, for instance sodium silicate, and they can be reacted at pre-established values of temperature and time in order to obtain the synthesis of a zeolitic material. At the end of the crystallization process, both the liquid and the solid phase are recovered through a suitable mechanical separation in order to:
1) check the efficiency of the recovery process of the mother solution, which is substantially made up of an NaOH solution, and the possibility of re-employing the same solution subsequently in pickling cycles;
2) foresee the disposal of the mud obtained as a not dangerous waste, or to characterize said mud in order to check its fitness for exploitation as a cation exchanger or as an adsorbent material in industrial processes which employ zeolites.

The interest in such a process consists in that it is possible, at least as a matter of principle, to employ at all times the same solution instead of the new solution for each pickling process, apart from a small addition of a fresh solution for restoring the initial characteristics of mass and alkalinity. This would result in the advantage of a remarkable decrease in the amount of fresh solution of sodium hydroxide needed for the pickling process and consequently a decrease in the volume of the exhausted reflux liquor, which can be disposed of just as a toxic waste.

From such considerations it is possible to see the double advantage of developing such process both from the ecological and the cost reduction standpoint.

A further advantage consists in the possibility of recovering and re-employing the synthesis product in industrial processes such as detergency and removal of harmful cations from the polluting wastes.

An experimental phase has also been carried out in order to classify the zeolitic final product so obtained and to set forth its possible exploitation at the industrial level. This allowed to set forth that the zeolite so obtained can also be put on the market and then that it can be resold so as to give an additional value to the industrial plant, or in case of poor industrial interest the product can be disposed of as a waste not harmful for the environment.

### A description of the extrusion process

The extruded sections represent the kind of unfinished products which is the most characteristic for aluminum and its alloys which are fit for plastic transformation.

Indeed, it is well known that such production technology is suitable for turning to account, through many various solutions concerning the shape, the basic properties of aluminum alloys like their low density, their high mechanical strength, their resistance to corrosion and their easy assembling.

Because of such reasons, aluminum extrusions represent a very important fraction (about 25%) of the total consumption of aluminum over the world, with an annual rate of increase which on the average is higher than the rate that has been recorded for other types of unfinished products of primary importance (castings, rolled sections, forged products, drawn sections).

The machine which is destined to carry out the extrusion is the press, whereas the very core of the process is made up of the die, which in its simplest form consists of a press-forged steel disk in which a slot is present that is realized according to particular criteria and is of the same shape as that of the section to be produced.

### A detailed description of the washing procedure for extrusion dies

At the end of the production cycle, when the extrusion die is taken out of the press it is necessary to clear all the die cavities of the aluminum in order to have the possibility of re-employing said die in a subsequent working cycle. To that end, the procedure usually adopted consists in the immersion of extrusion dies into suitable tanks containing a hot solution of sodium hydroxide for a certain number of hours. In such way aluminum becomes dissolved by the etching of sodium hydroxide, so that the extrusion die can be employed again.

The dissolution of the aluminum contained within the extrusion dies is carried out by means of etching with a sodium hydroxide solution according to the following reaction:

2Al + 2NaOH + 2H₂O 2NaAlO₂ + 3H₂

Obviously, as the reaction goes on a progressive saturation of the solution takes place, with the consequent loss of etching capability of the solution itself.

In a typical example of extrusion process which is carried out at the present time the extrusion dies, previously arranged in proper baskets, are dipped into washing tanks; the latter are filled with a 20% sodium hydroxide solution by means of metering pumps. The tanks are then heated up to 60°C by an outside boiler for activating the aluminum dissolution reaction, said reaction, being highly exothermal, causing the solution temperature to increase up to 100°C with evolvement of hydrogen vapours.

The duration of the die washing cycle is of about 6 hours, and after that time the extrusion dies are taken out of the tanks and washed with water jets to free them from the sodium hydroxide solution residues. The subsequent finishing operations which are necessary for full restoration of the extrusion dies are carried out by hand in the die-finishing shop.

The reflux liquor of sodium hydroxide is conveyed at the end of the working cycle into properly designed tanks for its storing before conveying it to the authorized plants for its disposal. In the case in question, the bath is discharged daily into a suitable stockage tank, so as to obtain a total daily volume of exhausted sodium hydroxide solution which can be up to 4,500 litres (including the washing water volumes discharged).

### The problem of recovering the extrusion die pickling solutions

The main problems raised by the process for treating the extrusion dies that has been disclosed up to now are linked on one side to the cost of the sodium hydroxide solution, but above all they are linked to the management costs and to the cost of disposal of the exhausted solutions.

The sodium hydroxide consumption is estimated to be of about 6 kg of sodium hydroxide per each extrusion die. Moreover, for each extrusion die processed there is a loss of 600 - 1,000 g of aluminum, which is transformed into the aluminate and is sent to the dump for being disposed of. For the stockage of the sodium hydroxide solutions remarkably large storage tanks are needed.

However, the most important aspect of the problem is experienced in the disposal of the the exhausted solutions that is to be carried out in special dumping places designed for harmful products (cod. CER 060202) which are difficult to find and not always available for wastes consisting of solutions. Firms not belonging to the production plant are entrusted with this operation, and this involves a remarkable cost.

From the problems found in the process of pickling of extrusion dies the need is deduced for suitable experiments to improve the present conditions both from the economic and the environmental standpoint, having considered the problems in connection with the disposal of harmful solutions.

Together with the finding of a solution to such problem, a study has been carried out to find the most efficient procedure for recovering the sodium hydroxide solution, for allowing it to be re-employed in subsequent processes of extrusion die pickling, and at the same time for recovering the aluminum whciich in the present-time processes is disposed of together with the exhausted solutions.

### A short description of the novel process for removal of aluminum through precipitation of zeolites

The Applicants have studied a solution to the problem of recovering the exhausted solutions from the pickling process of extrusion dies by addressing their experiments toward the recovery and re-employment of the sodium hydroxide solution for subsequent pickling processes and, in addition, toward the recovery of the aluminum dissolved in the exhausted solutions.

As was already mentioned in the preamble, the process that has been set forth consists in the addition to the aluminate-containing exhausted alkaline solution of an amount of silicate ions which, by reacting in the presence of Na⁺ ions at temperatures lower than 100°C can give rise to the formation of an aluminosilicate hydrated phase of zeolitic type which can separate from the solution in the form of a precipitate according to the following global reaction:

Na⁺ + nSi(OH)₄ + Al(OH)₄⁻ + aH₂O = ½[Na₂O.Al₂O₃.2nSiO₂,bH₂O]

with b = 4(n + 1) + 2a.

The reduction of concentration of the aluminate ion in the alkaline solution due to precipitation of the zeolitic phase allows, after filtration, the recovery and recycling of the same solution to be realized.

The pickling of the extrusion dies is carried out under the same conditions which are employed at present, i.e. the sodium hydroxide solution is heated up to 60°C by means of a heat exchanger and is conveyed into the washing tanks together with said dies.

When the time needed for the treatment has elapsed, the reflux liquor is conveyed into a mixing apparatus together with a determined amount of water which is necessary for adjusting the alkaline concentration of the solution to the optimal conditions for the synthesis, and together with the sodium silicate in such amounts as to respect the pre-established Si/Al ratio. The mixture is thus conveyed into the reactor for the synthesis, said reactor being heated up to 90°C for two hours.

At the end of the crystallization a filtration is carried out to separate the solid phase from the mother liquor which is recirculated into the washing tanks by adding it with a fresh solution of sodium hydroxide.

The solid phase is then conveyed to the washing treatment with water and then its is dried and ground. Further characteristics and advantages of this invention will become evident from the following description with reference to the enclosed drawing wherein:

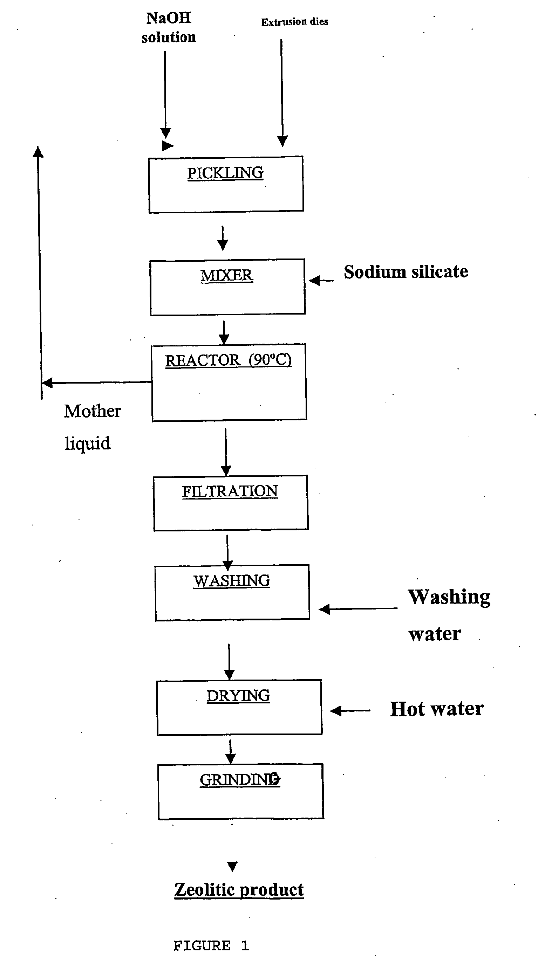

Fig. 1 is a block diagram of the process.

### Detailed description of the process

With reference to figure 1, the process provides six subsequent stages.

The first operation consists in the pickling process that is carried out in suitable tanks in which the extrusion dies are dipped and into which the sodium hydroxide solution is conveyed. The latter is previously heated up to 60°C through a tube bundle heat exchanger wherein the heating fluid consists of water. Once the tank has been filled up, the pickling process, which goes on for 6 hours, is started.

At the end of the process, the alkaline reflux liquor which contains aluminum dissolved is conveyed to a mixing apparatus together with suitable amounts of water and of sodium silicate. Water is necessary for adjusting the concentration of the [OH]⁻ ions to optimal values for the synthesis to occur correctly.

After being mixed, the reactants are conveyed into the reactor for the synthesis, said reactor being heated up to 90°C by means of a jacket through which steam at 100°C is passed. The condensate, which is still very hot, can be exploited in the heat exchanger for heating the sodium hydroxide solution to be used for the pickling process.

At the end of the crystallization of the zeolite, about two hours later, the mixture synthesized is conveyed to the filtering stage for separating the solid phase from the mother liquor which is recirculated to the pickling process after previously adding to it a fresh solution of sodium hydroxide for restoring the correct value of its alkaline concentration.

On the contrary, the solid phase is washed with water in order to remove the mother liquor residue. This operation can be carried out by means of spraying nozzles directly onto the solid itself which is separated from the washing water through the same filters as those employed for the separation of the mother liquor from the zeolite.

At the end of the washing procedure the solid phase is to be dried in an apparatus of indirect type, as the zeolite is a highly adsorbent material, so that the contact with the air or with other gases could change its characteristics.

The dried material is thus conveyed to the grinding operation in order to obtain a granulometry fit for the exploitation of such zeolite.

In the tests carried out with a pilot plant it has been possible to evaluate the type of apparatus which is the fittest one for each stage of the process.

As far as the filtration stage is concerned, numerous apparatus exist that can be suitable according to the pressure conditions adopted. An example concerning filtration under pressure is the filter-press, whereas as far as suction filtration is concerned, the Nutsche vacuum filters can be employed. Said filters are of simple structure and very cheap; however, filters of such type are widely used in operations of separation in which the amount of the solid pahse is small. They are made up of a container featuring a dummy drilled or porous bottom that can serve as a support for a filtering means. The suspension is fed into the container with said filter and the separation occurs generally under vacuum. The solid phase is removed by hand.

Filter-presses are on the contrary made up of an alternate set of plates which are covered on both their sides with a filtering means, and of gaps that serve to allow the solid to accumulate within the same during filtration. Generally the operative pressure in filter-presses reaches values up to 689 kPa and the plate sizes vary from 10 x 10 cm up to 1,5 x 1,8 m. The advantages of a filter-press are its structural simplicity, its low cost and the possibility to operate at high pressures both in the clarification operations and in the work for recovering the solid phase filtered. Moreover, filter-presses can be cleaned easily and the filtering means can be substituted very easily.

Both in the case of vacuum filters and in that of filter-presses it is necessary to choose a suitable filtering means according to the sizes of the solid phase to be separated. In the case in question, as the crystals of zeolites are sufficiently fine, filters consisting of textile fibres or paper filters having suitable pore sizes can be employed. In addition to the size of the filtered solid, when the filtering means is chosen, its resistance to the chemical attack of the solution, which is alkaline in the case in question, and its resistance to the operative pressure during filtration are to be kept into account.

After separation from the mother liquor, the solid phase can be washed directly on the filter itself with different modalities according to the type of filter that has been employed. If filtration has been carried out in a filter-press, the wash water is fed into the portion of the alternate set of plates (by closing the valves of the discharge channels). Wash water flows through the filtered solid and then flows out at the end opposite to that of the plates.

The drying operation of the synthesized solid cannot be carried out by feeding a hot gas because zeolite shows a high adsorption capacity, as already mentioned previously. Thus, it is necessary to proceed to an indirect drying operation on hot plates, under atmospheric pressure, as for instance in batch tray dryers or by using a slight suction system, as in vacuum-shelf dryers. In both kinds of dryers the plates on which the solid phase is placed are empty and in such cavities the heating means is passed, said means being in most cases a condensing vapour. Moreover, in the vacuum-shelf dryers the vapour given off due to the drying process is taken out of the suction apparatus and is conveyed to a condenser.

In the case in question, the holding time of the solid phase within the drying apparatus depends on the temperature of the operation. Temperatures of about 70°C for a time of 8 - 10 hours are sufficient for zeolites.

The grinding of the solid phase can be carried out within a hammer mill like the *Mikro Pulverizer hammer mill*, because a sufficiently fine granulometry is required. This type of mills is suitable for finely pulverizing and disintegrating non abrasive solids at high speed. The rotation axis is generally horizontal and hammers, which can have various shapes, are attached to the same. The grinding is the result of the impact and the attrition between the solid, the hammers, the shell of the mill and the elements for crushing. The fineness of the product can be adjusted through the change of the rotor speed, of the feed throughput or of the gap between hammers and the mill shell, and also by changing the type and number of hammers. In the case of the Mikro-Pulverizer hammer mill, the granulometry of the material fed in cannot be larger than 4 cm; if it is larger, an auxiliary crusher could be necessary.

## Claims

1. A process for recovering the sodium hydroxide solutions from the industrial reflux liquors from the pickling process of the extrusion dies for aluminum, said process comprising the addition of silicate ions to the alkaline exhausted pickling solution which contains aluminate, wherein the added amount of silicate ions is enough to obtain a Si/Al molar ratio equal to 1 in order to give rise, by reacting in the presence of Na⁺ ions at temperatures lower than 100°C, to the formation of an aluminosilicate hydrated phase of zeolitic type, according to the following global reaction:
Na⁺ + nSi(OH)₄ + Al(OH)₄⁻ + aH₂O = ½[Na_{2O}.Al₂O₃.2nSiO₂.bH₂O]
with b = 4(n + 1) + 2a,
that separates from the mother liquor in the form of a precipitate which is next filtered off; the separated mother solution being regenerated by adding therein a fresh solution of sodium hydroxide for restoring its starting chemical properties, and being recirculated into the pickling tanks for its re-employment in extrusion die pickling processes.

2. A process for recovering the sodium hydroxide solutions from the industrial reflux liquors from the pickling process of extrusion dies for aluminum as claimed in claim 1, **characterized in that** an additional stage is provided for recovering the precipitate.

3. A process for recovering the sodium hydroxide solutions from the industrial reflux liquors from the pickling process of extrusion dies for aluminum as claimed in claim 1, **characterized in that** the mother solution is regenerated by the addition of amounts of dilute solutions of NaOH up to restoring the alkaline concentration to values of about 6M..

4. A process for recovering the sodium hydroxide solutions from the industrial reflux liquors from the pickling process of extrusion dies for aluminum as claimed in claim 1, **characterized in that** the formation of the aluminosilicate hydrated phase of zeolitic type is obtained under conditions of no stirring and of heat treatment at the temperature of 90°C for about 2 hours.

5. A process for recovering the sodium hydroxide solutions from the industrial reflux liquors from the pickling process of extrusion dies for aluminum as claimed in claim 1, **characterized in that** under conditions of no stirring the synthesis process for the zeolite is obtained at 80°C and with heat treatment of 4 hours.

6. A process for recovering the sodium hydroxide solutions from the industrial reflux liquors from the pickling process of extrusion dies for aluminum as claimed in claim 1, **characterized in that** under conditions of stirring the synthesis process for the zeolite is faster, occurring in about half the time.

7. A process for recovering the sodium hydroxide solutions from the industrial reflux liquors from the pickling process of extrusion dies for aluminum as claimed in claim 1, **characterized in that** by adding sodium silicate to the reflux liquor up to obtain an Si/Al ratio equal to 1 the synthesis product obtained is a zeolite LINDE A in sodium form.

8. A process for recovering the sodium hydroxide solutions from the industrial reflux liquors from the pickling process of extrusion dies for aluminum as claimed in claim 1, **characterized in that** the following stages are provided in said process:
a) the alkaline reflux liquor containing aluminum dissolved and coming from the pickling tanks is conveyed to a mixing apparatus together with the amount of water needed for adjusting the alkaline concentration of the solution to the optimal conditions for the synthesis, and together with the sodium silicate in such amounts as to respect the pre-estabilished value of the ratio Si/Al;
b) the mixture so obtained is conveyed to a reactor for the synthesis which is heated up to 90°C for two hours;
c) at the end of crystallization a filtration is carried out in order to separate the solid from the mother liquor, the latter being recirculated into the pickling tanks and being replenished with a fresh solution of sodium hydroxide;
d) the filtered solid is conveyed to a water washing stage in order to remove the mother liquor residue, and then it is dried and ground.

9. A process for recovering the sodium hydroxide solutions from the industrial reflux liquors from the pickling process of extrusion dies for aluminum as claimed in claim 8, **characterized in that** the washing of the filtered solid is carried out by means of water spraying nozzles directly onto the solid phase which is separated from the washing water through the same filters as those employed for the separation of the mother liquor from the zeolite.

10. A process for recovering the sodium hydroxide solutions from the industrial reflux liquors from the pickling process of extrusion dies for aluminum as claimed in claim 8, **characterized in that** at the end of the washing the solid phase is dried in an apparatus of indirect type.

11. A process for recovering the sodium hydroxide solutions from the industrial reflux liquors from the pickling process of extrusion dies for aluminum as claimed in claim 8, **characterized in that** the alkaline concentration as [OH]⁻ ions within the solution for the process of synthesis is 6M.

## Patentansprüche

1. Verfahren zur Wiedergewinnung von Natriumhydroxidlösungen aus Industrie-Rücklaufflüssigkeiten aus einem Abbeizverfahren von Extrusionsmatrizen für Aluminium, wobei das Verfahren die Hinzufügung von Silikationen zu der alkalisch abgebauten Abbeizlösung enthält, welche Aluminat enthält, wobei die hinzugefügte Menge von Silikationen ausreicht, um ein Si/Al-Molarverhältnis gleich 1 zu erlangen, um durch eine Reaktion beim Vorliegen von Na⁺ Ionen bei Temperaturen niedriger als 100°C die Ausbildung von einer Alumosilikat-Hydrat-Phase von einem Zeolithtyp gemäß der folgenden allgemeinen Reaktion herbeizuführen:
Na⁺ + nSi(OH)₄ + Al(OH)₄⁻ + aH₂O = ½[Na₂O.Al₂O₃.2nSiO₂.bH₂O]
wobei b = 4 (n + 1) + 2a gilt,
welche sich von der Mutter-Flüssigkeit in der Form von einer Ausfällung, welche als Nächstes auszufiltern ist, trennt; wobei die getrennte Mutter-Lösung durch eine Hinzufügung von einer frischen Lösung von Natriumhydroxid darin regeneriert wird, um ihre beginnenden chemischen Eigenschaften wiederherzustellen, und in den Abbeiz-Tanks für ihre Wiederverwendung in den Extrusions-Matrize-Abbeizverfahren wieder in Umlauf gebracht wird.

2. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** ein zusätzlicher Schritt zur Wiedergewinnung der Ausfällung bereitgestellt wird.

3. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** die Mutter-Lösung durch die Hinzufügung von Verdünnungslösungsmengen von NaOH bis zur Wiederherstellung der alkalischen Konzentration auf Werte von etwa 6M regeneriert wird.

4. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** die Ausbildung von der Alumosilikat-Hydrat-Phase vom Zeolithtyp unter Zuständen einer ausbleibenden Verrührung und einer Wärmebehandlung bei einer Temperatur von 90°C für etwa zwei Stunden erlangt wird.

5. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** unter Zuständen einer ausbleibenden Verrührung das Syntheseverfahren für das Zeolith bei 80°C und mit einer Wärmebehandlung von vier Stunden erlangt wird.

6. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** unter Zuständen einer Verrührung das Syntheseverfahren für das Zeolith schneller ist, wobei es bei etwa der halben Zeit auftritt.

7. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** durch ein Hinzufügen von Natriumsilikat zu der Rücklaufflüssigkeit zum Erlangen eines Si/Al-Verhältnisses gleich 1, das erlangte Syntheseprodukt eine Zeolith LINDE A in Natriumform ist.

8. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 1, **dadurch gekennzeichnet, dass** die folgenden Schritte in dem Verfahren bereitgestellt werden:
a) die alkalische Rücklaufflüssigkeit, welche aufgelöstes Aluminium enthält und aus den Abbeiz-Tanks kommt, wird zusammen mit der Wassermenge, welche notwendig ist, um die alkalische Konzentration von der Lösung auf optimale Zustände für die Synthese einzustellen, und zusammen mit dem Natriumsilikat in solchen Mengen einer Mischeinrichtung zugeführt, um einem zuvor eingestellten Wert des Verhältnisses Si/Al zu entsprechen;
b) die derart erlangte Mischung wird einem Reaktor für die Synthese zugeführt, welcher für zwei Stunden auf bis zu 90°C erwärmt wird;
c) am Ende einer Kristallisation wird eine Filtrierung durchgeführt, um Festkörper von der Mutter-Flüssigkeit zu trennen, wobei Letztere wieder in die Abbeiz-Tanks in Umlauf gebracht wird und mit einer frischen Lösung von Natriumhydroxid aufgearbeitet wird;
d) der gefilterte Festkörper wird einer Wasserwaschstufe zugeführt, um einen Mutter-Flüssigkeit-Restanteil zu entnehmen, und wird dann getrocknet und niedergelegt.

9. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 8, **dadurch gekennzeichnet, dass** das Auswaschen des gefilterten Festkörpers mittels Wassersprühdüsen direkt auf die Festkörperphase durchgeführt wird, welche von dem Waschwasser über die gleichen Filter wie jene, welche für das Trennen von der Mutter-Flüssigkeit von dem Zeolith verwendet werden, getrennt ist.

10. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 8, **dadurch gekennzeichnet, dass** am Ende der Auswaschung die Festkörper-Phase in einer Einrichtung eines indirekten Typs getrocknet wird.

11. Verfahren zur Wiedergewinnung von Natriumhydroxidlösungen aus Industrie-Rücklaufflüssigkeiten aus einem Abbeizverfahren von Extrusionsmatrizen für Aluminium nach Anspruch 8, **dadurch gekennzeichnet, dass** die alkalische Konzentration als [OH]⁻ Ionen innerhalb der Lösung für das Verfahren der Synthese gleich 6M beträgt.

## Revendications

1. Procédé de récupération de solutions d'hydroxyde de sodium de liqueurs industrielles de recyclage provenant d'un procédé de décapage de matrices d'extrusion de l'aluminium, ledit procédé comprenant l'addition d'ions silicate à la solution de décapage alcaline usée qui contient de l'aluminate, dans lequel la quantité ajoutée d'ions silicate est suffisante pour donner un rapport molaire Si/Al égal à 1 afin de favoriser, par une réaction en présence d'ions Na⁺ à des températures inférieures à 100°C, la formation d'une phase hydratée d'aluminosilicate du type zéolite, selon la réaction globale suivante :
Na⁺ + nSi(OH)₄ + Al(OH)₄⁻ + aH₂O = 1/2[Na₂O.Al₂O₃.2nSiO₂.bH₂O]
avec b = 4(n + 1) + 2a,
qui se sépare de la liqueur mère sous la forme d'un précipité qui est ensuite séparé par filtration ; la solution mère séparée étant régénérée par addition à celle-ci d'une solution fraîche d'hydroxyde de sodium pour restaurer ses propriétés chimiques de départ, et étant recyclée dans les cuves de décapage pour sa nouvelle utilisation dans des procédés de décapage de matrices d'extrusion.

2. Procédé de récupération de solutions d'hydroxyde de sodium de liqueurs industrielles de recyclage provenant d'un procédé de décapage de matrices d'extrusion de l'aluminium selon la revendication 1, **caractérisé en ce qu'**une étape supplémentaire est fournie pour récupérer le précipité.

3. Procédé de récupération de solutions d'hydroxyde de sodium de liqueurs industrielles de recyclage provenant d'un procédé de décapage de matrices d'extrusion de l'aluminium selon la revendication 1, **caractérisé en ce que** la solution mère est régénérée par l'addition de quantités de solutions diluées de NaOH jusqu'à la restauration de la concentration alcaline à des valeurs d'environ 6M.

4. Procédé de récupération de solutions d'hydroxyde de sodium de liqueurs industrielles de recyclage provenant d'un procédé de décapage de matrices d'extrusion de l'aluminium selon la revendication 1, **caractérisé en ce que** la formation de la phase hydratée d'aluminosilicate du type zéolite est réalisée dans des conditions d'absence d'agitation et de traitement thermique à une température de 90°C pendant environ 2 heures.

5. Procédé de récupération de solutions d'hydroxyde de sodium de liqueurs industrielles de recyclage provenant d'un procédé de décapage de matrices d'extrusion de l'aluminium selon la revendication 1, **caractérisé en ce que** dans des conditions d'absence d'agitation, le procédé de synthèse de la zéolite est réalisé à 80°C et avec un traitement thermique de 4 heures.

6. Procédé de récupération de solutions d'hydroxyde de sodium de liqueurs industrielles de recyclage provenant d'un procédé de décapage de matrices d'extrusion de l'aluminium selon la revendication 1, **caractérisé en ce que** dans des conditions d'agitation, le procédé de synthèse de la zéolite est plus rapide, dans la mesure où il a lieu deux fois plus vite.

7. Procédé de récupération de solutions d'hydroxyde de sodium de liqueurs industrielles de recyclage provenant d'un procédé de décapage de matrices d'extrusion de l'aluminium selon la revendication 1, **caractérisé en ce que** par l'addition de silicate de sodium à la liqueur de recyclage jusqu'à l'obtention d'un rapport Si/Al égal à 1, le produit de synthèse obtenu est une zéolite LINDE A sous forme sodique.

8. Procédé de récupération de solutions d'hydroxyde de sodium de liqueurs industrielles de recyclage provenant d'un procédé de décapage de matrices d'extrusion de l'aluminium selon la revendication 1, **caractérisé en ce que** les étapes suivantes sont fournies dans ledit procédé :
a) la liqueur alcaline de recyclage contenant l'aluminium dissous et provenant des cuves de décapage est envoyée dans un appareil de mélange avec la quantité d'eau nécessaire pour ajuster la concentration alcaline de la solution aux conditions optimales pour la synthèse et avec des quantités de silicate de sodium telles que la valeur préétablie du rapport Si/Al est respectée ;
b) le mélange ainsi obtenu est envoyé dans un réacteur pour la synthèse qui est chauffé jusqu'à 90°C pendant deux heures ;
c) à la fin de la cristallisation, une filtration est réalisée afin de séparer le solide de la liqueur mère, cette dernière étant recyclée dans les cuves de décapage et réapprovisionnée en solution fraîche d'hydroxyde de sodium ;
d) le solide filtré est envoyé vers une étape de lavage à l'eau afin d'éliminer le résidu de liqueur mère et il est ensuite séché et broyé.

9. Procédé de récupération de solutions d'hydroxyde de sodium de liqueurs industrielles de recyclage provenant d'un procédé de décapage de matrices d'extrusion de l'aluminium selon la revendication 8, **caractérisé en ce que** le lavage du solide filtré est réalisé à l'aide de buses de pulvérisation d'eau directement sur la phase solide qui est séparée de l'eau de lavage par les mêmes filtres que ceux employés pour la séparation de la liqueur mère de la zéolite.

10. Procédé de récupération de solutions d'hydroxyde de sodium de liqueurs industrielles de recyclage provenant d'un procédé de décapage de matrices d'extrusion de l'aluminium selon la revendication 8, **caractérisé en ce que,** à la fin du lavage, la phase solide est séchée dans un appareil de type indirect.

11. Procédé de récupération de solutions d'hydroxyde de sodium de liqueurs industrielles de recyclage provenant d'un procédé de décapage de matrices d'extrusion de l'aluminium selon la revendication 8, **caractérisé en ce que** la concentration alcaline sous forme d'ions [OH]⁻ au sein de la solution pour le procédé de synthèse est de 6M.
